# EUROPEAN PATENT APPLICATION

(11) **EP 4 576 870 A1**
(43) Date of publication of application: **25.06.2025**
(21) Application number: 23867245.5
(22) Date of filing: 30.08.2023
(51) Int. Cl.: H04W 28/02

(54) **INFORMATION TRANSMISSION METHOD AND APPARATUS**

(30) Priority: 19.09.2022 CN 202211137886
(71) Applicant: ZTE CORPORATION, Shenzhen, Guangdong 518057 (CN)
(72) Inventor: ZHU, Wei, Shenzhen, Guangdong 518057 (CN); ZHANG, Yujie, Shenzhen, Guangdong 518057 (CN); CHENG, Wenyuan, Shenzhen, Guangdong 518057 (CN); CHEN, Jianhua, Shenzhen, Guangdong 518057 (CN); LIU, Rong, Shenzhen, Guangdong 518057 (CN); WEI, Yuanqing, Shenzhen, Guangdong 518057 (CN)
(74) Representative: Carangelo, Pierluigi
(86) International application number: PCT/CN2023/115978
(87) International publication number: WO 2024/060954

(57) **Abstract**

Provided in the embodiments of the present disclosure are an information transmission method and apparatus. The method comprises: when wired interface interconnection of a first cellular communication device fails, the first cellular communication device constructs, into a sending action sequence of a preset wireless signal sequence, information to be transmitted via a wired interface; and, according to the sending action sequence, the first cellular communication device sends via an air interface the preset wireless signal sequence, so as to transmit the information to at least one second cellular communication device.

## Description

### Cross-Reference to Related Application

The present disclosure is based on and claims priority to Chinese Patent Application 202211137886.5, filed September 19, 2022 and entitled "Information Transmission Method and Apparatus", the present disclosure of which is incorporated herein by reference in its entirety.

### Technical Field

Embodiments of the present disclosure relate to the field of communications, and in particular, to an information transmission method and apparatus.

### Background

In the 3rd Generation Partnership Project (3GPP) communication scenarios, when faults occur at an S1 interface of a base station, the base station typically loses its connection to an Operation and Maintenance (O&M) system, resulting in network service outages within a certain physical area. Due to the severe impact on users, it is essential to quickly identify a root cause of the problem to guide resolution of the problem. However, as the base station is disconnected, there is insufficient data for problem analysis, making it difficult to meet the aforementioned demands. Therefore, it is necessary to further tap the potential for information transmission in such scenarios and improve the availability of O&M information.

In these scenarios, since a traditional northbound interface (a channel relied upon for management functions) of the base station fails, the transmission pathways for maintenance and measurement information of the base station naturally focus on the following two physical routes: a power supply line and an air interface. However, the technical route of the power supply line is often hindered by inconsistent installation conditions of power supply facilities, often requiring the addition of power line modems or equivalent devices, posing significant challenges in terms of feasibility and cost.

Regarding the technical route of the air interface, it is a feasible technical solution for a sender to simulate User Equipment (UE) to communicate with a base station (serving as a receiver) through some existing air interface protocols. However, this presents certain technical difficulties for both the sender and the receiver. Additionally, in theory, the sender and receiver could also convey information based on some macro characteristics of wireless signals (such as signal power). However, in a current status of a cellular network, the wireless environment is typically very complex, and these macro characteristics are often severely disturbed by multiple factors, rendering such solution unusable.

### Summary

Embodiments of the present disclosure provide an information transmission method and apparatus, which may at least solve the problem in the related art that effective information transmission cannot be performed because a northbound interface fails, thereby affecting user communication.

According to some embodiments of the present disclosure, an information transmission method is provided, including: in a case where interconnection of a wired interface of a first cellular communication device is invalid, constructing, by the first cellular communication device, information to be transmitted via the wired interface into a transmission action sequence of a preset wireless signal sequence; and transmitting, by the first cellular communication device, the preset wireless signal sequence via an air interface according to the transmission action sequence, so as to transmit the information to at least one second cellular communication device.

According to another embodiment of the present disclosure, an information transmission apparatus is provided, which is applied to a first cellular communication device and includes: a sequence construction module, configured to construct, in a case where interconnection of a wired interface of a first cellular communication device is invalid, information to be transmitted via the wired interface into a transmission action sequence of a preset wireless signal sequence; and a sequence transmitting module, configured to transmit the preset wireless signal sequence via an air interface according to the transmission action sequence, so as to transmit the information to at least one second cellular communication device.

According to yet another embodiment of the present disclosure, a computer readable storage medium is also provided. The computer readable storage medium stores a computer program, and the computer program, when run by a processor, executes the information transmission method in any one of the method embodiments.

According to still another embodiment of the present disclosure, an electronic device is also provided, including a memory, a processor, and a computer program stored on the memory and capable of running on the processor, wherein the processor, when running the computer program, implements the information transmission method in any one of the method embodiments.

### Brief Description of the Drawings

Fig. 1 is a block diagram of the hardware structure of a mobile terminal of an information transmission method according to some embodiments of the present disclosure;
Fig. 2 is a structural block diagram of a network framework of an information transmission method according to some embodiments of the present disclosure;
Fig. 3 is a flowchart of information transmission according to some embodiments of the present disclosure;
Fig. 4 is a flowchart of information transmission according to some embodiments of the present disclosure;
Fig. 5 is a flowchart of information transmission according to some embodiments of the present disclosure;
Fig. 6 is a structural block diagram of an information transmission apparatus according to some embodiments of the present disclosure;
Fig. 7 is a structural block diagram of an information transmission apparatus according to some embodiments of the present disclosure;
Fig. 8 is a structural block diagram of an information transmission apparatus according to some embodiments of the present disclosure;
Fig. 9 is a structural block diagram of a network framework of an information transmission method according to some embodiments of the present disclosure;
Fig. 10 is a structural block diagram of a network framework of an information transmission method according to some embodiments of the present disclosure;
Fig. 11 is a schematic diagram of the principle of information transmission according to a scenario embodiment of the present disclosure;
Fig. 12 is a schematic diagram of a network framework of an information transmission apparatus according to a scenario embodiment of the present disclosure;
Fig. 13 is a flowchart of an information transmission method according to a scenario embodiment of the present disclosure;
Fig. 14 is a schematic diagram of a network framework of an information transmission apparatus according to a scenario embodiment of the present disclosure;
Fig. 15 is a flowchart of an information transmission method according to a scenario embodiment of the present disclosure;
Fig. 16 is a schematic diagram of an encoding/decoding principle according to a scenario embodiment of the present disclosure; and
Fig. 17 is a schematic diagram of an encoding/decoding principle according to a scenario embodiment of the present disclosure.

### Detailed Description of the Embodiments

The embodiments of the present disclosure will be described below in detail with reference to the accompanying drawings and in conjunction with embodiments.

It should be noted that terms such as "first" and "second" in the description of the embodiments of the present disclosure, the claims and the drawings are used to distinguish similar objects, and are not necessarily used to describe a specific sequence or order.

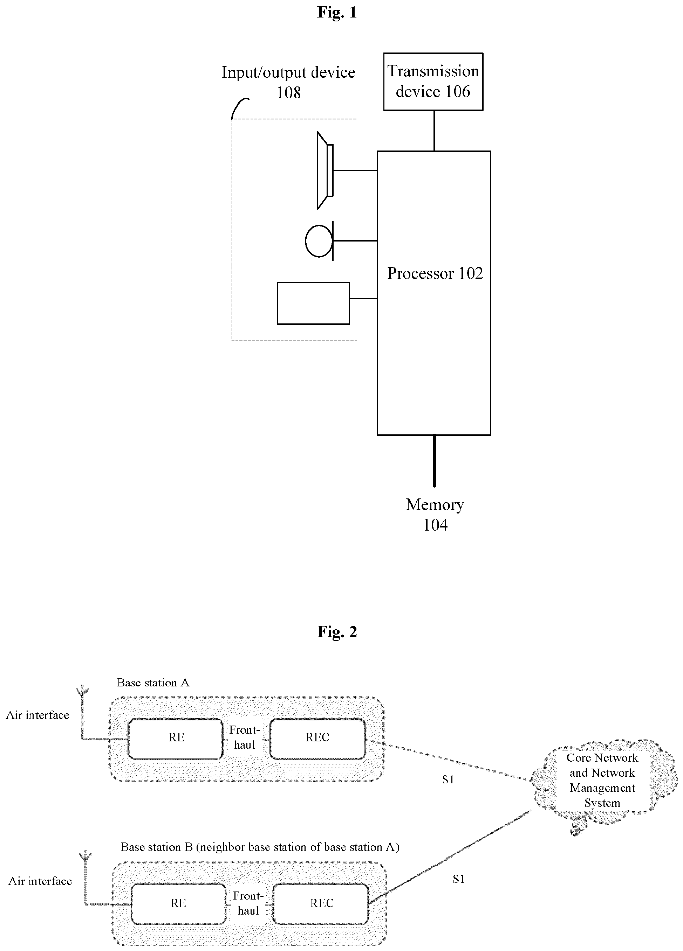

The method embodiments provided in the embodiments of the present disclosure may be implemented in a mobile terminal, a computer terminal, or a similar computing apparatus. Taking the running on the mobile terminal as an example, Fig. 1 is a block diagram of the hardware structure of a mobile terminal of an information transmission method according to some embodiments of the present disclosure. As shown in Fig. 1, the mobile terminal may include one or more (only one is shown in Fig. 1) processors 102 (the one or more processors 102 may include, but are not limited to, a microprocessor (Micro Controller Unit (MCU) or a processing apparatus such as a programmable logic device (Field Programmable Gate Array (FPGA)) and a memory 104 configured to store data. The mobile terminal may further include a transmission device 106 configured to perform a communication function and an input/output device 108. Those having ordinary skill in the art may understand that the structure shown in Fig. 1 is merely exemplary, which does not limit the structure of the foregoing mobile terminal. For example, the mobile terminal may further include more or fewer components than shown in Fig. 1, or have a different configuration from that shown in Fig. 1.

The memory 104 may be configured to store a computer program, for example, a software program and a module of application software, such as a computer program corresponding to the information transmission method in the embodiments of the present disclosure. The one or more processors 102 run the computer program stored in the memory 104, so as to execute various function applications and data processing, that is, to implement the foregoing information transmission method. The memory 104 may include a high-speed random access memory, and may also include a non-volatile memory, such as one or more magnetic storage devices, flash memory, or other non-volatile solid-state memory. In some instances, the memory 104 may further include a memory remotely located with respect to the one or more processors 102, which may be connected to mobile terminal over a network. Examples of such networks include, but are not limited to, the Internet, intranets, local area networks, mobile communication networks, and combinations thereof.

The transmission device 106 is configured to receive or transmit data via a network. Specific examples of the described network may include a wireless network provided by a communication provider of the mobile terminal. In an embodiment, the transmission device 106 may include a Network Interface Controller (NIC) that may be coupled to other network devices via a base station to communicate with the Internet. In an embodiment, the transmission device 106 may be a Radio Frequency (RF) module configured to communicate with the Internet wirelessly.

The embodiments of the present disclosure may run on the network architecture shown in Fig. 2. As shown in Fig. 2, the network architecture includes: a base station A, a base station B, a core network or a network management system, wherein the base station A and the base station B both communicate with the core network or the network management system via an S1 interface, and each base station includes a Radio Equipment (RE) and a Radio Equipment Controller (REC).

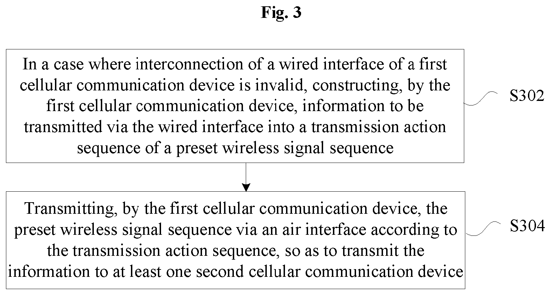

The embodiments of the present disclosure provide an information transmission method running on the above mobile terminal or network architecture. Fig. 3 is a flowchart of information transmission according to some embodiments of the present disclosure. As shown in Fig. 3, the flow includes the following operations S302 and S304.

In operation S302, in a case where interconnection of a wired interface of a first cellular communication device is invalid, the first cellular communication device constructs information to be transmitted via the wired interface into a transmission action sequence of a preset wireless signal sequence.

In an exemplary embodiment of the present disclosure, an REC of the first cellular communication device firstly transmits data (i.e., the information to be transmitted via the wired interface) and constructs the transmitted data into the preset wireless signal sequence, the REC generates transmission action commands (i.e., a transmission action sequence) according to the preset wireless signal sequence for indicating transmission actions of the REC. The operations of transmitting the data, constructing the preset wireless signal sequence and generating the transmission action sequence may be implemented by an Operations, Administration, and Management (OAM) module of the REC.

In operation S304, the first cellular communication device transmits the preset wireless signal sequence via an air interface according to the transmission action sequence, so as to transmit the information to at least one second cellular communication device.

In an exemplary embodiment of the present disclosure, the transmission of the preset wireless signal sequence may be implemented by a physical layer processing module (PHY) of the REC, and the PHY completes the transmission of the preset wireless signal sequence according to a preset period and the transmission action sequence.

By means of the described operations, a first cellular communication device constructs information to be transmitted via a wired interface into a transmission action sequence of a preset wireless signal sequence; and the first cellular communication device transmits the preset wireless signal sequence via an air interface according to the transmission action sequence, so as to transmit the information to one or more second cellular communication devices. The solution of the embodiments of the present disclosure may solve the problem that effective information transmission cannot be performed in a case where interconnection of a wired interface of a first cellular communication device fails, thereby affecting user communication, and may achieve the effect of improving communication operability and reliability.

The foregoing operations may be, but is not limited to be, performed by a base station or a terminal.

In some embodiments of the present disclosure, the wired interface may be a northbound interface or any other available wired interface between neighbor cellular communication devices.

In an exemplary embodiment, the operation that the first cellular communication device constructs the information to be transmitted via the wired interface into the transmission action sequence of the preset wireless signal sequence includes: the first cellular communication device performs time sequence encoding according to the information to generate the preset wireless signal sequence, and constructs the transmission action sequence of the preset wireless signal sequence.

In an exemplary embodiment, the operation that the first cellular communication device constructs the information to be transmitted via the wired interface into the transmission action sequence of the preset wireless signal sequence further includes: the first cellular communication device performs sequential encoding according to the information to generate the preset wireless signal sequence, and constructs the transmission action sequence of the preset wireless signal sequence.

In an exemplary embodiment of the present disclosure, an encoding mode of the OAM module of the REC when constructing the preset wireless signal sequence may be a time sequence encoding mode or a sequential encoding mode. As long as the second cellular communication device that receives the preset wireless signal sequence performs decoding according to the same mode, that is, a pre-agreed decoding mode, the data transmitted by the first cellular communication device can be acquired by parsing.

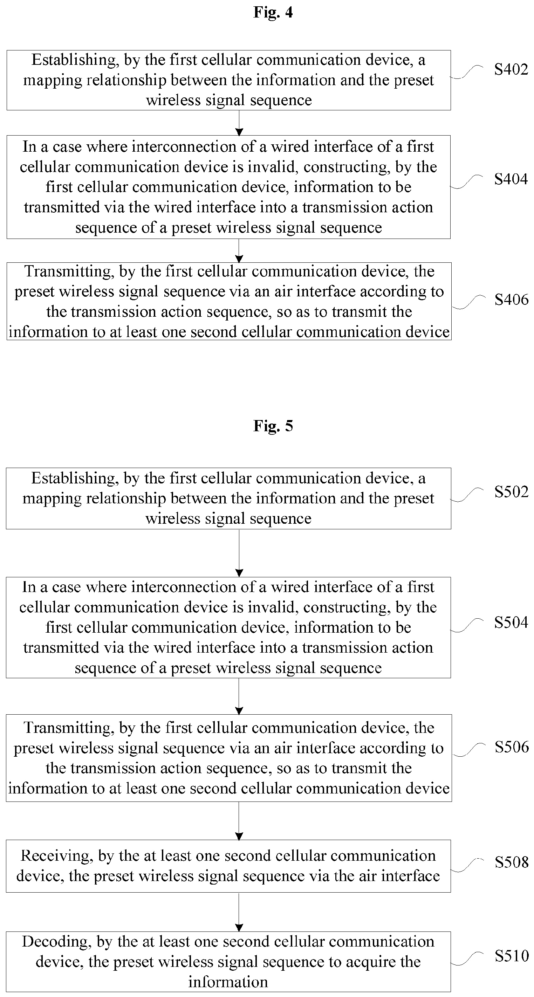

In an exemplary embodiment, before the first cellular communication device constructs the information to be transmitted via the wired interface into the transmission action sequence of the preset wireless signal sequence, the information transmission method further includes: the first cellular communication device establishes a mapping relationship between the information and the preset wireless signal sequence. Fig. 4 is a flowchart of information transmission according to some embodiments of the present disclosure. As shown in Fig. 4, the flow includes the following operations S402 to S406.

In operation S402, a first cellular communication device establishes a mapping relationship between information and a preset wireless signal sequence.

In an exemplary embodiment of the present disclosure, before the preset wireless signal sequence is constructed, the mapping relationship between the information and the preset wireless signal sequence needs to be established first, that is, pre-agreement and unification are made for an encoding mode and a decoding mode of the preset wireless signal sequence, so as to facilitate subsequent encoding and decoding operations.

In operation S404, in a case where interconnection of a wired interface of the first cellular communication device is invalid, the first cellular communication device constructs the information to be transmitted via the wired interface into a transmission action sequence of the preset wireless signal sequence.

In operation S406, the first cellular communication device transmits the preset wireless signal sequence via an air interface according to the transmission action sequence, so as to transmit the information to at least one second cellular communication device.

In an exemplary embodiment, the preset wireless signal sequence includes a wireless signal sequence or a set of wireless signal sequences.

In an exemplary embodiment, the set of wireless signal sequences includes multiple identical wireless signal sequences or multiple different wireless signal sequences.

In an exemplary embodiment of the present disclosure, the preset wireless signal sequence may be a Remote Interference Management Reference Signal (RIM-RS) sequence.

In the embodiments of the present disclosure, the set of wireless signal sequences may be implemented in the form of time sequence encoding, or implemented by using loose sequential encoding or performing sequential encoding based on an information combination, as long as a unified and definite mapping relationship between the information and the preset wireless signal sequence is established between base stations, likewise, the mapping relationship same as that established by the first cellular communication device may be established by the second cellular communication device. In addition, in a communication process, mapping relationships of all related cellular communication devices should be the same, so as to implement the communication via the air interface.

In an exemplary embodiment, after the first cellular communication device transmits the preset wireless signal sequence via the air interface according to the transmission action sequence, the information transmission method further includes: the at least one second cellular communication device receives the preset wireless signal sequence via the air interface; and decodes the preset wireless signal sequence to acquire the information. Fig. 5 is a flowchart of information transmission according to some embodiments of the present disclosure. As shown in Fig. 5, the flow includes the following operations S502 to S510.

In operation S502, a first cellular communication device establishes a mapping relationship between information and a preset wireless signal sequence.

In operation S504, in a case where interconnection of a wired interface of a first cellular communication device is invalid, the first cellular communication device constructs the information to be transmitted via the wired interface into a transmission action sequence of the preset wireless signal sequence.

In operation S506, the first cellular communication device transmits the preset wireless signal sequence via an air interface according to the transmission action sequence, so as to transmit the information to at least one second cellular communication device.

In operation S508, the at least one second cellular communication device receives the preset wireless signal sequence via the air interface;

In operation S510, the at least one second cellular communication device decodes the preset wireless signal sequence to acquire the information.

In an exemplary embodiment of the present disclosure, the second cellular communication device may receive the preset wireless signal sequence via a PHY of an REC of the second cellular communication device and subsequently decode the preset wireless signal sequence through an OAM of the REC of the second cellular communication device.

Through the description of the foregoing embodiments, those having ordinary skill in the art may clearly understand that the information transmission method according to the foregoing embodiments may be implemented by software in addition to a necessary universal hardware platform, and definitely may also be implemented by hardware. However, in many cases, the former is a preferred implementation. Based on such understanding, the essence of the technical solutions of the present disclosure or the part contributing to the common technology may be embodied in the form of a software product. The computer software product may be stored in a storage medium (such as a Read Only Memory (ROM)/Random Access Memory (RAM), a magnetic disk, and an optical disk), and includes several instructions for instructing a terminal device (which may be a mobile phone, a computer, a server, a network device, or the like).

An information transmission apparatus is also provided in the embodiments of the present disclosure. The information transmission apparatus is configured to implement the described embodiments and exemplary implementations, and what has been described will not be elaborated. The term "module", as used hereinafter, is a combination of software and/or hardware capable of realizing a predetermined function. Although the information transmission apparatus described in the following embodiments is preferably implemented by software, implementation of hardware or a combination of software and hardware is also possible and conceived. For exemplary implementations in this embodiment, reference may be made to the foregoing examples described in the embodiments and the exemplary embodiments of the information transmission method, and details are not repeatedly described herein in this embodiment.

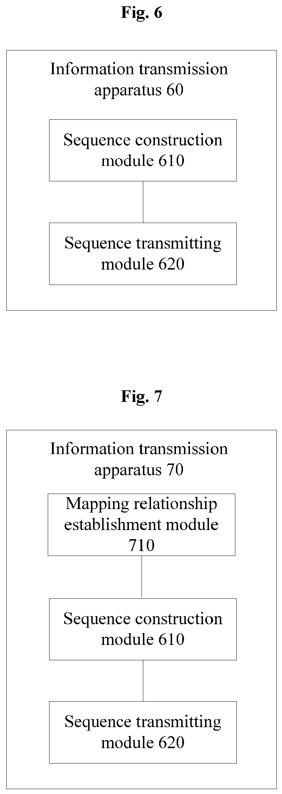

Fig. 6 is a structural block diagram of an information transmission apparatus according to some embodiments of the present disclosure. As shown in Fig. 6, the information transmission apparatus 60 includes: a sequence construction module 610, configured to construct, in a case where interconnection of a wired interface of a first cellular communication device is invalid, information to be transmitted via the wired interface into a transmission action sequence of a preset wireless signal sequence; and a sequence transmitting module 620, configured to transmit the preset wireless signal sequence via an air interface according to the transmission action sequence, so as to transmit the information to at least one second cellular communication device.

Fig. 7 is a structural block diagram of an information transmission apparatus according to some embodiments of the present disclosure. As shown in Fig. 7, in an exemplary embodiment, the information transmission apparatus 70 not only includes each module in Fig. 6, but also includes: a mapping relationship establishment module 710, configured to establish a mapping relationship between the information and the preset wireless signal sequence.

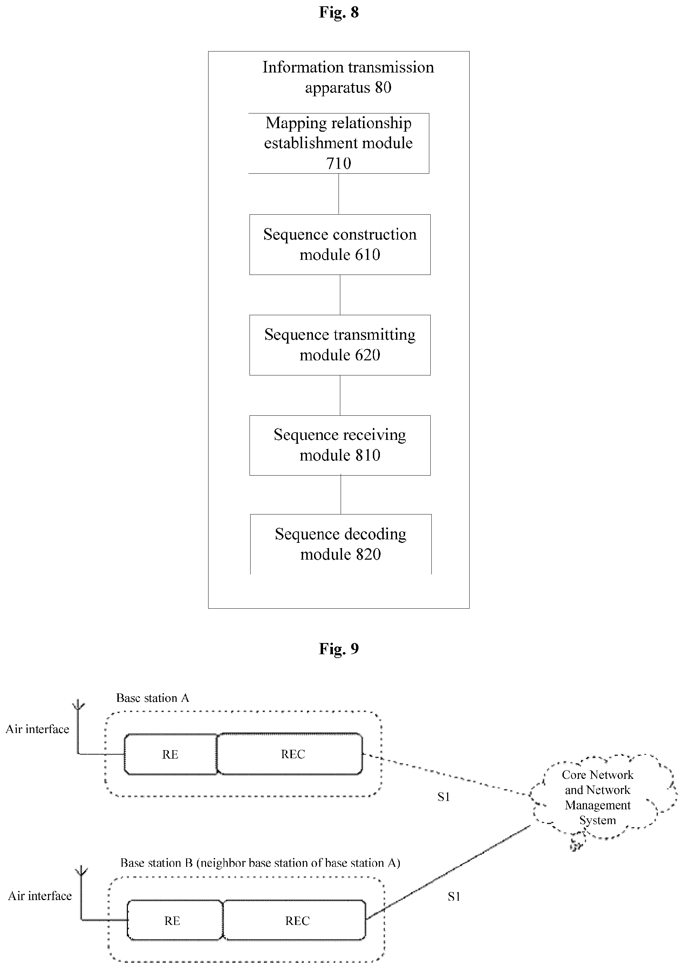

Fig. 8 is a structural block diagram of an information transmission apparatus according to some embodiments of the present disclosure. As shown in Fig. 8, in an exemplary embodiment, in addition to each module in Fig. 7, the information transmission apparatus 80 further includes, a sequence receiving module 810 configured to receive the preset wireless signal sequence via the air interface; and a sequence decoding module 820 configured to decode the preset wireless signal sequence to acquire the information.

It should be noted that each module may be implemented by software or hardware. The latter may be implemented in the following manner, but is not limited thereto. All the modules are located in a same processor; alternatively, the modules are located in different processors in an arbitrary combination.

The embodiments of the present disclosure also provide a computer readable storage medium. The computer readable storage medium stores a computer program, and the computer program, when run by a processor, executes the information transmission method in any one of the described method embodiments.

In an exemplary embodiment, the computer readable storage medium may include, but is not limited to, any medium that can store a computer program, such as a Universal Serial Bus (USB) flash drive, an ROM, an RAM, a removable hard disk, a magnetic disk, or an optical disc.

The embodiments of the present disclosure further provide an electronic device, including a memory, a processor, and a computer program stored on the memory and capable of running on the processor, wherein the processor, when running the computer program, implements the information transmission method in any one of the method embodiments.

In an exemplary embodiment, the electronic device can further include a transmission device and an input/output device, wherein the transmission device is connected to the processor, and the input/output device is connected to the processor.

For exemplary implementations in this embodiment, reference may be made to the examples described in the foregoing embodiments and exemplary embodiments, and details are not repeatedly described in this embodiment.

Obviously, those having ordinary skill in the art should understand that each module or each operation of the present disclosure may be implemented by a universal computing device, they may be centralized on a single computing device or distributed on a network composed of a plurality of computing devices, they can be implemented by program codes executable by a computing apparatus, and thus can be stored in a storage apparatus and executed by the computing apparatus. Furthermore, in some cases, the shown or described operations may be executed in an order different from that described here, or they are made into integrated circuit modules respectively, or a plurality of modules or operations therein are made into a single integrated circuit module for implementation. As such, the present disclosure is not limited to any particular hardware and software combination.

To make those having ordinary skill in the art better understand the technical solutions of the present disclosure, the technical solution is described as follows with reference to exemplary scenario embodiments. In an exemplary scenario embodiment, although the specific module name and module function division may be different from those described above, but final function purposes thereof are the same.

With the advancement of technology, the feasibility and reliability of information transmission between wireless devices through known protocols have rapidly improved. A typical example is the Remote Interference Management Reference Signal (RIM-RS) sequence introduced by the 3GPP during the Long Term Evolution (LTE) era for coordinating interference over the air interface. The transmission process of the RIM-RS sequence is simple, and the reception and identification processes of the RIM-RS sequence are not complex. Due to the excellent characteristics, the RIM-RS sequence may also achieve reliable recognition under complex air interface conditions such as interference, multipath, and timing offsets.

The selection of such signal sequences mainly considers the following aspects.

Firstly, the transmission and reception of these signal sequences are harmless or have an acceptable impact on the existing network. Secondly, these signals ideally have strong detectability and strong anti-interference capabilities during transmission and reception, including but not limited to multipath, timing offsets, signal attenuation, etc.

The RIM-RS has been widely discussed and used within the scope of the 3GPP, and its signal characteristics meet the "harmless" requirement. At the same time, the RIM-RS sequence has excellent transmission reliability and anti-interference capability, making it one of the more ideal choices for implementing the present disclosure (any signal sequence that meets the above two considerations can be a specific choice for the present disclosure). Generally, sequences such as RIM-RS may carry the following information: an identity of the sequence (which may be understood as an ID from 1 to 64 for specific encoding), an angle of arrival, and a delay from a sender to a receiver. Among the information, the identity of the sequence is relatively easy to use accurately.

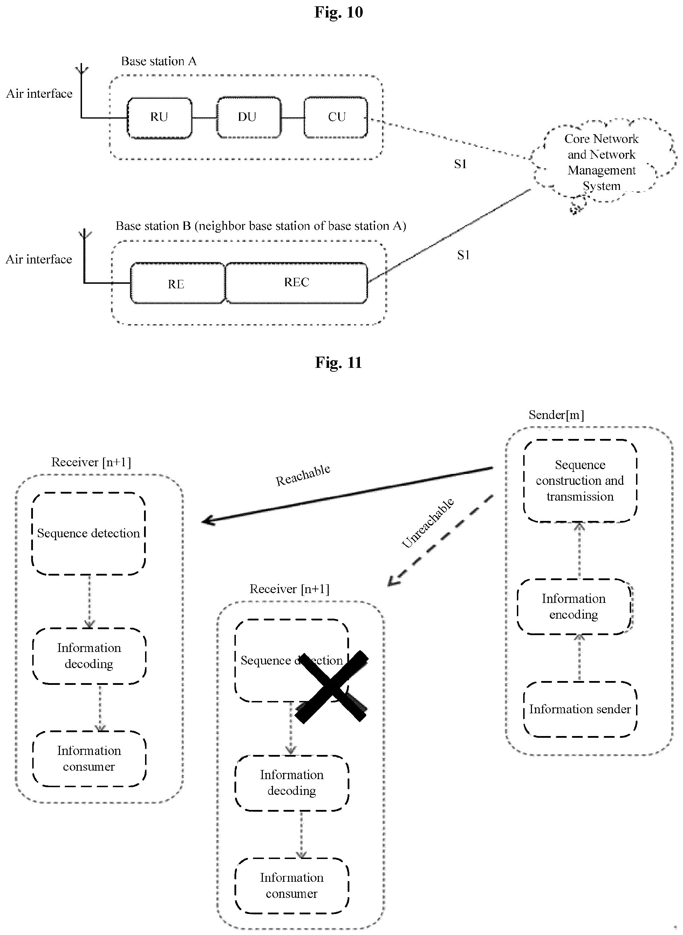

The embodiments provided in the present disclosure is mainly applied to the wireless device scenarios of cellular networking, such as 3GPP Radio Access Network (RAN) networking scenarios involving a Distributed Radio Access Network (D-RAN) and a Centralized Radio Access Network (C-RAN). In addition to the network framework of remote radio base stations shown in Fig. 2, the solution of the embodiments of the present disclosure may also be applied to the network framework of integrated base stations shown in Fig. 9 and the network framework of cloud-evolved base stations shown in Fig. 10. In Fig. 10, RU refers to the Radio Unit, DU refers to the Distributed Unit, and CU refers to the Central Unit. The present disclosure is applicable to many device forms, with the key approach being the air interface, which is not affected by the physical form of the device.

### Scenario embodiment 1

Fig. 11 is a schematic diagram of the principle of information transmission according to a scenario embodiment of the present disclosure. As shown in Fig. 11, information transmission mainly includes a data sending process and a data receiving process. In Fig. 11, the term "module" is omitted in the blocks.

Data sending process:
As shown in Fig. 11, the information sender module, which is referred to as the "information sender" in Fig. 11, of the sender passes data to the information encoding module, which is referred to as the "information encoding" in Fig. 11 for information encoding, and notifies the "sequence construction and transmission" module to transmit one signal sequence or a set of signal sequences into the air interface. The information encoding module may or may not exist, and the function of the information encoding module may be implemented by the information sender module.

Data receiving process:
As the receiver, some base stations are able to receive and detect the sequence, while others may fail to receive the sequence or fail to detect the sequence after receiving the sequence. For a base station capable of detecting the sequence, the "sequence detection" module detects the corresponding sequence and forwards the sequence to the "information decoding" module within the base station, which then delivers the information to the information consumer. Similarly, the information decoding module may or may not exist, and the function of the information decoding module may be implemented by the "information consumer" module.

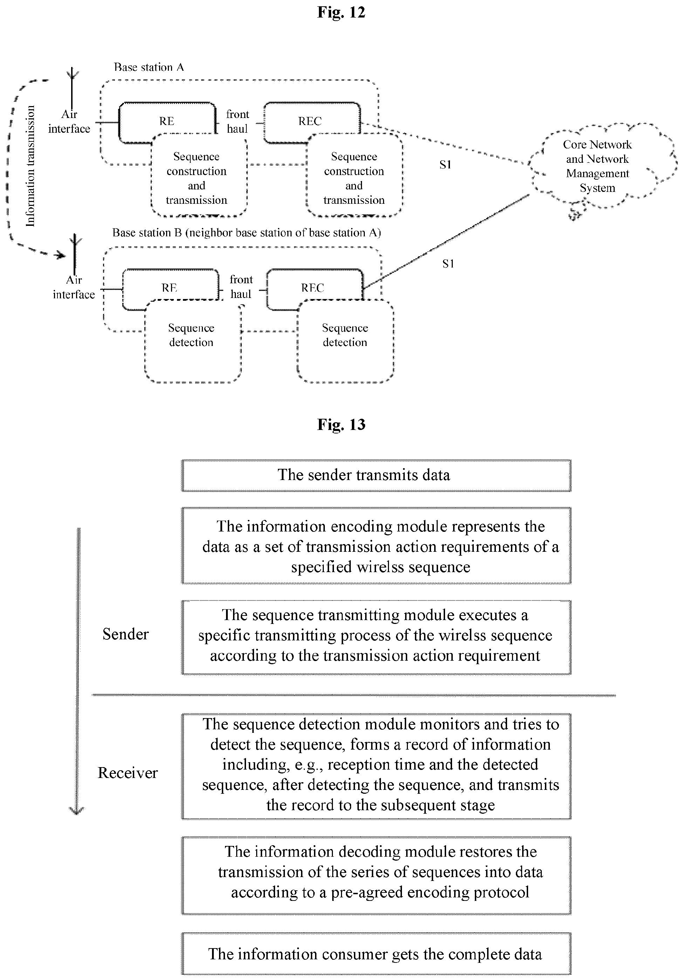

Each module in Fig. 11 is implemented through a specific communication network framework of the base station. Fig. 12 is a schematic diagram of a network framework of an information transmission apparatus according to a scenario embodiment of the present disclosure. As shown in Fig. 12, the "sequence construction and transmission" module may be set in an RE or an REC, and the "sequence detection" module may be set in the RE or the REC. The construction and detection of the RIM-RS are relatively fixed and may be supported by both the RE and REC in the 3GPP framework, offering high flexibility. For the sender, placing the "sequence construction and transmission" module at the RE may address maintenance requirements for both fronthaul (REC to RE) disconnection and backhaul (REC to network management and core network) disconnection scenarios; while placing the "sequence construction and transmission" module at the REC typically only handles backhaul disconnection requirements. For the receiver, there is no difference in capability whether the "sequence construction and transmission" module is placed at the RE or REC. In an exemplary implementation process of the network framework, the relatively more challenging module is the "sequence construction and transmission" module of the sender and the "sequence detection" module of the receiver. The "information decoding" module, the "information sender" module, and the "information consumer" module usually have less processing demand and may be flexibly arranged within the base station.

In this embodiment, the data sending and receiving process in Fig. 11 may be implemented through the following process. Fig. 13 is a flowchart of an information transmission method according to a scenario embodiment of the present disclosure. As shown in Fig. 13, the process includes the following operations S1302 to S1312.

In operation S1302, the sender transmits data.

In operation S1304, the information encoding module represents the data as a set of transmission action requirements of a specified wireless sequence.

In operation S1306, the sequence transmitting module executes a specific transmitting process of the wireless sequence according to the transmission action requirement.

In operation S1308, the sequence detection module monitors and tries to detect the sequence, forms a record of information including, e.g., reception time and the detected sequence, after detecting the sequence, and transmits the record to the subsequent stage.

In operation S1310, the information decoding module restores the transmission of the series of sequences into data according to a pre-agreed encoding protocol.

In operation S1312, the information consumer gets the complete data.

In the exemplary embodiment of the present disclosure, the described transmission action requirements are the transmission action sequence, which are used for representing transmission commands for instructing the sequence transmitting module to transmit a designated wireless sequence, i.e., the preset wireless signal sequence.

### Scenario embodiment 2

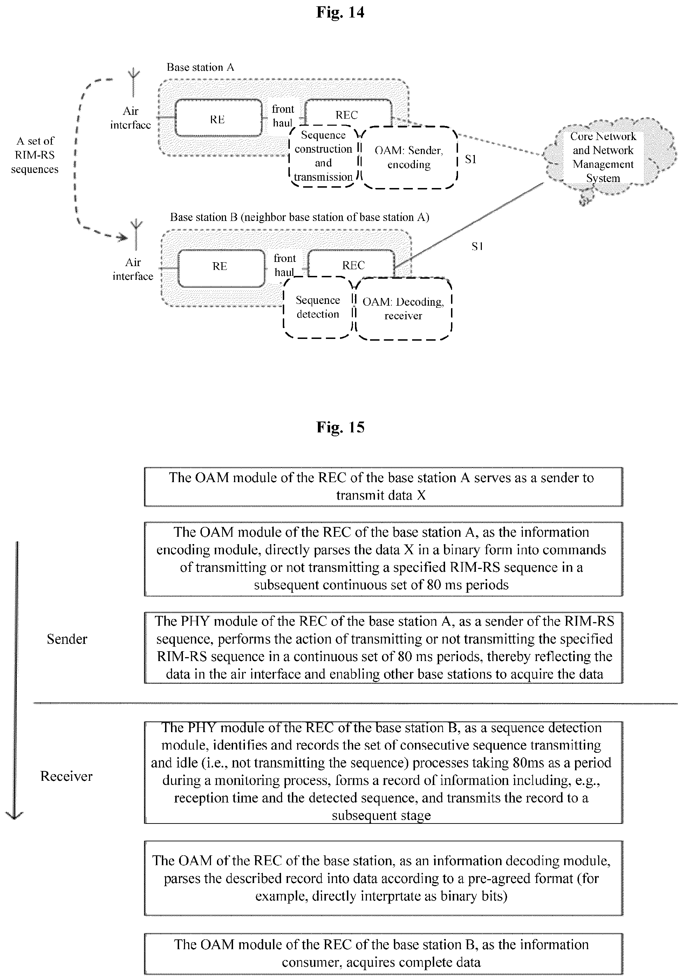

The scenario embodiment provides an exemplary embodiment of using a set of RIM-RS sequences in TDD NR (the same applies to TDD LTE). Fig. 14 is a schematic diagram of a network framework of an information transmission apparatus according to a scenario embodiment of the present disclosure. As shown in Fig. 14, the sequence construction and transmission module is arranged in REC software of the base station A. The functions of the information sender module and the information encoding module are implemented by an Operation Administration Maintenance (OAM) of the REC, The "sequence detection" module of the base station B is located in a Physical Layer Protocol (PHY) processing module of the REC, and identifies the RIM-RS sequence by decoding, records the identified sequence together with the time, and delivers the recorded information to the OAM module (for decoding and information usage) of the REC of the base station B. The base station B is a base station which is able to monitor and identify the RIM-RS sequence transmitted by the base station A, and may monitor the RIM-RS sequence based on a conditional trigger or monitor the RIM-RS sequence on a GP symbol constantly.

In the present scenario embodiment, the transmission characteristics of the RIM-RS are as follows.

Due to a Time Division Duplex (TDD) system, after S1 interface disconnection, the timing of the base station A and the base station B remains highly synchronized for a period of time, so this temporal consistency can be utilized.

The base station A, as the sender, retains only the GP (Guard Period) slot for wireless signal transmission as the channel for sending sequences after the S1 interface disconnection. The OAM module in the REC of the base station A implements the functions of "information sender" and "information encoding". After the S1 disconnection, the information to be transmitted is organized into a set of commands, and the PHY software within the REC (acting as the "sequence construction and transmission" module) is notified to transmit the set of specified RIM-RS sequences according to the intervals and rhythms formed by the information encoding, with a single sequence transmission period preferably set to 80ms. Here, it may be designated that transmitting the sequence in the period represents 1, and the idle period (i.e., not transmitting the sequence in the period) represents 0.

Thus, under the close collaboration of the OAM and the PHY of the base station A, with 80ms as the atomic period, a sequence of information that can be understood as a 0, 1 sequence is transmitted into the air interface through RIM-RS. Through the aforementioned process, a complete cycle of information encoding, sending, receiving, and restoring is formed. More specifically, if the OAM of the base station A wants to inform that the S1 disconnection is due to the lack of optical signal on the S1 network interface, it only needs to provide a further representation based on the aforementioned information transmission to achieve the notification of this disconnection cause.

Fig. 15 is a flowchart of an information transmission method according to a scenario embodiment of the present disclosure. As shown in Fig. 15, the flow includes the following operations S1502 to S1512.

In operation S1502, the OAM module of the REC of the base station A serves as a sender to transmit data X.

In operation S1504, the OAM module of the REC of the base station A, as the information encoding module, directly parses the data X in a binary form into commands of transmitting or not transmitting a specified RIM-RS sequence in a subsequent continuous set of 80 ms periods.

In operation S1506, the PHY module of the REC of the base station A, as a sender of the RIM-RS sequence, performs the action of transmitting or not transmitting the specified RIM-RS sequence in a continuous set of 80 ms periods, thereby reflecting the data in the air interface and enabling other base stations to acquire the data.

In operation S1508, the PHY module of the REC of the base station B, as a sequence detection module, identifies and records the set of consecutive sequence transmitting and idle (i.e., not transmitting the sequence) processes taking 80ms as a period during a monitoring process, forms a record of information including, e.g., reception time and the detected sequence, and transmits the record to a subsequent stage.

In operation S1510, the OAM of the REC of the base station, as an information decoding module, parses the described record into data according to a pre-agreed format (for example, directly interpreted as binary bits).

In operation S1512, the OAM module of the REC of the base station B, as the information consumer, acquires complete data.

The PHY module is a physical layer processing module.

### Scenario embodiment 3

The scenario embodiment provides an information encoding and decoding manner different from that in the scenario embodiment 2.

Loose sequential encoding format:
The greatest difference between this encoding manner and the encoding manner in the scenario embodiment 2 is that the loose sequential encoding manner does not require strict timing for transmission actions.

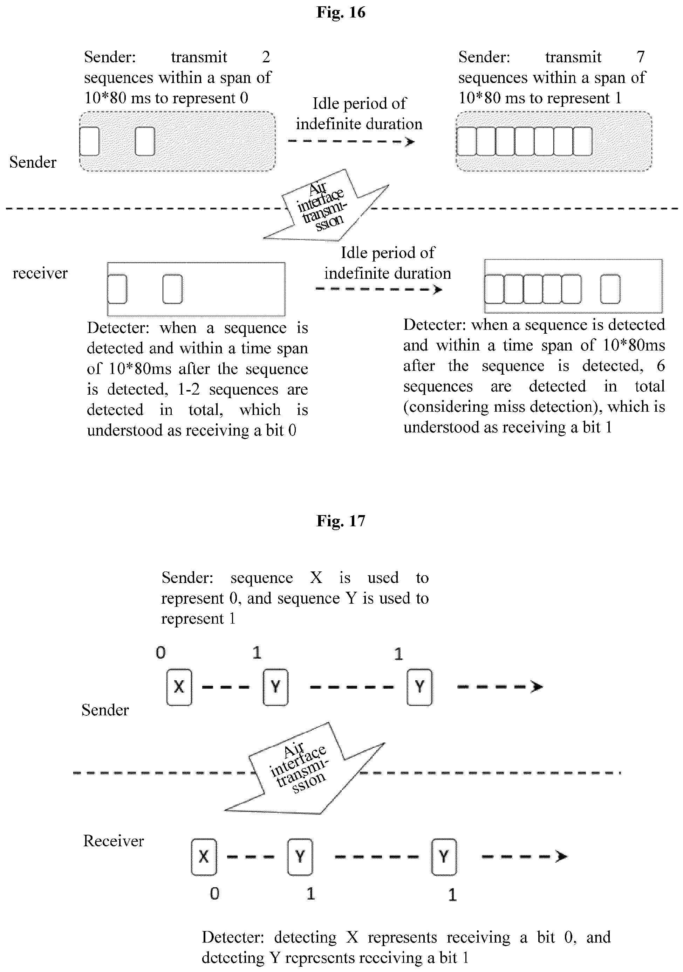

Fig. 16 is a schematic diagram of an encoding/decoding principle according to a scenario embodiment of the present disclosure. As shown in Fig. 16, in this scenario embodiment, it is defined that one RIM-RS transmission requires 80ms, and 10 consecutive 80ms are defined to form a detection window. The sender and the receiver agree to express 0 and 1 as follows: within a time window formed by 10*80ms, if 1 to 2 RIM-RS sequences are detected within the time window, it is considered that the current time window conveys a bit representing 0; if more than 6 RIM-RS sequences are detected within the time window, it is considered that the current time window conveys a bit representing 1; if no sequence is detected within the time window, it indicates that the current time window is idle and no data is transmitted. To simplify information analysis, it is further agreed that within the time window for transmitting bits, the first 80ms of the time window should send the RIM-RS sequence.

Sequential encoding based on information combination:
The greatest difference between the sequential encoding based on information combination and the above manner is the use of more than one group of RIM-RSs, which has a stronger information expression capability at the single-bit level. Like the loose sequential encoding manner, sequential encoding based on information combination does not require strict timing for transmission actions. Fig. 17 is a schematic diagram of an encoding/decoding principle according to a scenario embodiment of the present disclosure.

In summary, the embodiments of the present disclosure provide an information transmission method and apparatus in the field of wireless communication, primarily used for horizontal information exchange between stations in cellular communication scenarios, aiming to solve the problem of interaction of an isolated device with the network in scenarios where the wired interface, such as the northbound interface, between devices is partially invalid. The solution of the embodiments of the present disclosure achieves atomic information transmission by transmitting wireless signal sequences with good transmission effects (including but not limited to RIM-RS sequences) between wireless devices, and forms the reliable transmission of a set of information through the timing encoding transmission and reception process of atomic information transmission or more flexible (and more complex) sequential encoding transmission and reception process. The high feasibility and reliability of the solution of the embodiments of the present disclosure will greatly achieve the white-box maintenance and measurement of wireless devices after they go offline, greatly improving the maintainability of such network scenarios. Moreover, the solution of the embodiments of the present disclosure does not increase additional costs on the basis of existing cellular networking equipment and has high technical competitiveness and economic value.

The solution of the embodiments of the present disclosure has opened up a novel way of information transmission between base station products and is a very promising infrastructure. One of the typical applications is the interaction of maintenance and measurement information for disconnected base stations, which can achieve the white-box maintenance and measurement for disconnected devices, with clear engineering benefits (as well as economic benefits). At the same time, because this method provides an information transmission infrastructure and a new way of horizontal connection for base station equipment, its actual value will continue to expand with the increase in usage. The application value of the solution of the embodiments of the present disclosure is mainly reflected in the maintenance and measurement of remote devices in wireless communication networking scenarios.

The above descriptions are only exemplary embodiments of the present disclosure, and are not intended to limit the present disclosure. For those having ordinary skill in the art, the embodiments of the present disclosure may have various modifications and variations. Any modifications, equivalent replacements, improvements and the like made within the principle of the embodiments of the present disclosure shall fall within the scope of protection of the present disclosure.

## Claims

1. An information transmission method, comprising:
in a case where interconnection of a wired interface of a first cellular communication device is invalid, constructing, by the first cellular communication device, information to be transmitted via the wired interface into a transmission action sequence of a preset wireless signal sequence; and
transmitting, by the first cellular communication device, the preset wireless signal sequence via an air interface according to the transmission action sequence, so as to transmit the information to at least one second cellular communication device.

2. The information transmission method according to claim 1, wherein constructing, by the first cellular communication device, the information to be transmitted via the wired interface into the transmission action sequence of the preset wireless signal sequence comprises:
performing, by the first cellular communication device, time sequence encoding according to the information to generate the preset wireless signal sequence, and constructing, by the first cellular communication device, the transmission action sequence of the preset wireless signal sequence.

3. The information transmission method according to claim 1, wherein constructing, by the first cellular communication device, the information to be transmitted via the wired interface into the transmission action sequence of the preset wireless signal sequence comprises:
performing, by the first cellular communication device, sequential encoding according to the information to generate the preset wireless signal sequence, and constructing, by the first cellular communication device, the transmission action sequence of the preset wireless signal sequence.

4. The information transmission method according to claim 1, wherein before constructing, by the first cellular communication device, the information to be transmitted via the wired interface into the transmission action sequence of the preset wireless signal sequence, the information transmission method further comprises:
establishing, by the first cellular communication device, a mapping relationship between the information and the preset wireless signal sequence.

5. The information transmission method according to claim 1, wherein the preset wireless signal sequence comprises a wireless signal sequence or a set of wireless signal sequences.

6. The information transmission method according to claim 5, wherein the set of wireless signal sequences comprises multiple identical wireless signal sequences or multiple different wireless signal sequences.

7. The information transmission method according to claim 1, wherein after transmitting, by the first cellular communication device, the preset wireless signal sequence via the air interface according to the transmission action sequence, the information transmission method further comprises:
receiving, by the at least one second cellular communication device, the preset wireless signal sequence via the air interface; and
decoding, by the at least one second cellular communication device, the preset wireless signal sequence to acquire the information.

8. An information transmission apparatus, applied to a first cellular communication device and comprising:
a sequence construction module, configured to construct, in a case where interconnection of a wired interface of a first cellular communication device is invalid, information to be transmitted via the wired interface into a transmission action sequence of a preset wireless signal sequence; and
a sequence transmitting module, configured to transmit the preset wireless signal sequence via an air interface according to the transmission action sequence, so as to transmit the information to at least one second cellular communication device.

9. The information transmission method according to claim 8, further comprising:
a mapping relationship establishment module, configured to establish a mapping relationship between the information and the preset wireless signal sequence.

10. The information transmission method according to claim 8, further comprising:
a sequence receiving module, configured to receive the preset wireless signal sequence via the air interface; and
a sequence decoding module, configured to decode the preset wireless signal sequence to acquire the information.

11. A computer readable storage medium, wherein the computer readable storage medium stores a computer program, and the computer program, when run by a processor, executes the information transmission method according to any one of claims 1 to 7.

12. An electronic device, comprising a memory, a processor, and a computer program stored on the memory and capable of running on the processor, wherein the processor, when running the computer program, implements the information transmission method according to any one of claims 1 to 7.
